# EUROPÄISCHE PATENTSCHRIFT

(11) **EP 3 609 749 B1**
(45) Veröffentlichungstag und Bekanntmachung des Hinweises auf die Patenterteilung: **17.03.2021**
(21) Anmeldenummer: 18716231.8
(22) Anmeldetag: 05.04.2018
(51) Int. Cl.: B60S 1/56, B60S 1/48

(54) **REINIGUNGSVORRICHTUNG ZUM REINIGEN EINES TRANSPARENTEN ELEMENTS EINER OPTISCHEN ODER OPTOELEKTRONISCHEN VORRICHTUNG**
CLEANING DEVICE FOR CLEANING A TRANSPARENT ELEMENT OF AN OPTICAL OR OPTOELECTRONIC DEVICE
DISPOSITIF DE NETTOYAGE SERVANT À NETTOYER UN ÉLÉMENT TRANSPARENT D'UN DISPOSITIF OPTIQUE OU OPTOÉLECTRONIQUE

(30) Priorität: 12.04.2017 DE 102017206265
(43) Veröffentlichungstag der Anmeldung: 19.02.2020
(73) Patentinhaber: Continental Automotive GmbH, 30165 Hannover (DE)
(72) Erfinder: HAHN, Torsten, 34576 Homberg (DE); RINGLER, Dirk, 36289 Friedewald-Motzfeld (DE)
(74) Vertreter: Continental Corporation
(86) Internationale Anmeldenummer: PCT/EP2018/058692
(87) Internationale Veröffentlichungsnummer: WO 2018/189017

(56) Entgegenhaltungen:
- WO-A1-2016/116568
- DE-B3-102015 217 546
- US-A1- 2013 146 577
- US-A1- 2013 219 742
- US-A1- 2016 001 330
- US-A1- 2016 103 316

## Beschreibung

Die Erfindung betrifft eine Reinigungsvorrichtung zum Reinigen eines transparenten Elements einer optischen oder optoelektronischen Vorrichtung, insbesondere einer Kamera, sowie eine optische Erfassungsvorrichtung zur Anordnung in einem Fahrzeug, umfassend die vorgenannten optische oder optoelektronische Vorrichtung mit Reinigungsvorrichtung und ein Fahrzeug, in welchem die vorgenannte Reinigungsvorrichtung oder optische Erfassungsvorrichtung verbaut ist.

Bei Kraftfahrzeugen sind heutzutage zunehmend Assistenzsysteme mit Sensoren eingebaut, die den Fahrzeugnutzer beim Fahren des Fahrzeuges unterstützen und dabei die Umgebung des Fahrzeugs jederzeit zuverlässig erfassen und überwachen sollen. Derartige Assistenzsysteme beinhalten hierfür optische oder optoelektronische Vorrichtungen wie beispielsweise Kameras, laserbasierten oder Infrarotsensoren. Derartige Vorrichtungen verfügen über transparente Elemente wie Linsen oder Abdeckungen, welche das Licht je nach Anwendungsfall uneingeschränkt oder in einem bestimmten eingeschränkten Wellenbereich durchlassen. Derartige transpatente Elemente sind oft nach Außen konvex beziehungsweise gewölbt ausgebildet um beispielsweise einen besonders breiten Erfassungsbereich für eine Kamera zu ermöglichen wie beispielsweise sogenannten Fisheye Kameralinsen. Des Weiteren sind derartigen transpatenten Elemente funktionsbedingt im Außenbereich des Fahrzeugs angeordnet und daher Ganzjährig unter verschiedenen klimatischen Bedingungen Verschmutzung und äußeren Witterungseinflüssen ausgesetzt und müssen zur Funktionsgewährleistung bei Bedarf gereinigt und eisfrei gehalten werden. Dabei spielt die räumliche Position der Düse in der Einbaulage im Fahrzeug ebenfalls eine wichtige Rolle, denn zum einen muss darauf geachtet werden, dass das Sichtfeld der optischen oder optoelektronischen Vorrichtung möglichst nicht eingeschränkt ist, zum anderen müssen spezifische Bedingungen im Fahrtbetrieb berücksichtigt werden wie beispielsweise oberflächennahen Luftströmungen, welche die Sprüh- und Fließrichtung von Reinigungsmittel signifikant beeinflussen können.

Aus DE 10 2015 217 546 B3 ist eine gattungsgemäße Reinigungsvorrichtung für eine Kamera bekannt, bei welcher Austrittsöffnungen beziehungsweise Düsen aus einem gemeinsamen, die Linse der Kamera radial umlaufenden Ringkanal gespeist werden. Hierdurch können die Düsen einem lediglich geringen konstruktiven Aufwand beliebig um die optische Achse der Kamera gedreht positioniert und dadurch effizient für unterschiedliche Applikationen angepasst werden und die Reinigungsvorrichtung mit einem vergleichsweise geringen Druck betrieben werden.

Aus US 2016/103316 A1 ist eine weitere Reinigungsvorrichtung bekannt, bei der ein Kameraobjektiv radial außen von einem kastenförmigen Ringkanal umschlossen ist, welcher gegenüber dem Kameraobjektiv einen signifikanten axialen Vorsatz aufweist. Ein ringförmiges Heizelement wird auf einer dem Kameraobjektiv zugewandten Außenseite geklebt oder in diese integriert.

Ein stetiger Wunsch nach Effizienzsteigerung, Reduzierung von störenden Einflüssen auf das äußere Erscheinungsbild des Fahrzeugs sowie der allgemeine technische Fortschritt führen bei den eingesetzten optischen und optoelektronischen Vorrichtungen zu deren Miniaturisierung, Verringerung der Leistungsaufnahme und Erhöhung des Wirkungsgrades. Dadurch werden sie jedoch anfälliger für Verschmutzung und Umwelteinflüsse, so dass eine zuverlässige Reinigung mit bekannten Reinigungssystemen im Extremfall und insbesondere deren Enteisung bei niedrigen Temperaturen unterhalb des Gefrierpunktes sowie Schneefall mit erhöhten Zeitaufwand, Reinigungsmittelverbrauch und Betriebsdruck verbunden ist.

Vor diesem Hintergrund liegt der Erfindung die Aufgabe zugrunde, eine verbesserte Reinigungsvorrichtung bereitzustellen, die die es ermöglicht, die Verfügbarkeit und Funktionsgewährleistung der verwendeten optischen oder optoelektronischen Vorrichtungen bei allen Wetterbedingungen und Betriebszuständen zu erhöhen beziehungsweise jederzeit auf einem hohen Niveau zu erhalten.

Diese Aufgabe wird durch die Merkmale der unabhängigen Ansprüche 1 und 2 gelöst. Weiterbildungen und verschiedene Ausführungsbeispiele der Erfindung ergeben sich aus den Unteransprüchen und der nachfolgenden Beschreibung und Figuren.

Die Erfindung sieht vor, dass wenigstens ein elektrisch leitendes Heizelement zum Beheizen des Ringkanals und/oder zumindest eines dem Ringkanal unmittelbar benachbarten Bereichs des Gehäuses oder des Reinigungsmittelzulaufs vorgesehen ist.

Dabei ist der Ringkanalgemäß der bevorzugten Weiterbildung durch eine Vertiefung in dem Gehäuse gebildet, welche eine optische Achse der Vorrichtung radial umläuft und durch ein Deckelelement verschlossen ist. Dabei ist wenigstens eine Düse an dem Deckelelement angeordnet und die Schnittstelle zwischen dem Deckelelement und dem Gehäuse ist hydraulisch dicht, bevorzugt stoffschlüssig, insbesondere verschweißt ausgebildet.

Es wird so eine kompakte und effektive Reinigungsvorrichtung mit weiten Anpassungsmöglichkeiten geschaffen, die unter allen Wetterbedingungen zuverlässig funktioniert. Eine Vereisung kann besonders effektiv verhindert und der Verbrauch von flüssigen Enteisungskomponenten innerhalb des Reinigungsmittels signifikant reduziert, die allgemeine Systemsicherheit bei niedrigen Temperaturen wird erhöht. Die Reinigungswirkung wird dabei durch ein System mehrerer Einflussfaktoren bestimmt. Dieses System besteht aus der Anzahl der Düsen, dem Druck und Menge des Reinigungsmittels, der Sprühdauer und Anzahl der Wiederholungen. Die einzelnen Parameter dieses Systems lassen sich mit der Erfindung individuell auf die jeweiligen Erfordernisse optimiert einstellen.

Zusätzlich wird die verwendete optische oder optoelektronische Vorrichtung indirekt beheizt und dadurch in einem optimalen Betriebstemperaturbereich gehalten. Des Weiteren wird ein Tauniederschlag zuverlässig verhindert und dadurch die optische Qualität verbessert.

Gemäß eine bevorzugten Ausführungsform der Erfindung ist die Düse einstückig mit dem Deckelelement ausgebildet vorgesehen. Die Düsen können dabei mit Vorteil in ihren Ausgestaltungen, Anzahl und Position nahezu unbegrenzt variabel angeordnet und kombiniert werden. Als Folge kann die Reinigungsvorrichtung lediglich durch das Vorhalten von unterschiedlichen Varianten des kostengünstig herstellbaren Deckelelements in ihren Varianten kosteneffizient an unterschiedlichste Einsatzszenarien und Verbauorte angepasst werden, ohne dass andere Bauteile und Komponenten geändert werden müssen.

Gemäß einer ersten Ausführungsform der Erfindung ist das Heizelement in dem Gehäuse innerhalb des Ringkanals, besonders bevorzugt zusätzlich in dem Reinigungsmittelzulauf angeordnet vorgesehen. Hierdurch kann das Heizelement besonders kostengünstig als Heizdraht gestaltet werden, welches das Reinigungsmittel unmittelbar direkt, sowie die Umgebung und die optische oder optoelektronische Vorrichtung indirekt durch die Wärmeübertragung aus dem Ringkanal in das Gehäuse und auf die in das Gehäuse eingesetzte optische oder optoelektronische Vorrichtung, beheizen kann. Ebenso wird die Beheizung der gesamten Zuleitung ebenfalls ermöglicht.

Gemäß einer anderen erfindungsgemäßen Ausführungsform kann das Heizelement aus einem flachen Metallwerkstoff, insbesondere als ein Stanzbiegeteil ausgebildet werden. Nach einer zweiten Ausführungsform der Erfindung ist das Heizelement in dem Gehäuse außerhalb des Ringkanals angeordnet, insbesondere eingespritzt oder mit einer Vergußmasse vergossen. Dadurch kann eine besonders effektive konduktive Wärmeabgabe realisiert welche durch größere Oberflächen zusätzlich erhöht wird. Zudem besteht dabei die die Möglichkeit, das Gehäuse trocken zu heizen und vorzuheizen um beispielsweise eine Vereisung oder Betauung des transparenten Elements ohne Verbrauch von Reinigungsmittel zu vermeiden. Des Weiteren ist das Heizelement vom unmittelbaren Kontakt mit dem Reinigungsmittel effektiv geschützt, wodurch die Gefahren von Korrosion und Kurzschlüssen reduziert werden. Ebenso kann dadurch der elektrische Heizelementanschluss - beispielsweise Stecker - mit Vorteil unabhängig von der Wasserführenden Leitung und ohne gesonderte Abdichtung an einer beliebigen Stelle am Gehäuse bedarfsgerecht herausgeführt werden.

Die Erfindung betrifft weiterhin eine optische Erfassungsvorrichtung, zur Anordnung in einem Fahrzeug, umfassend eine Kamera, die mit einer Reinigungsvorrichtung nach einem der vorangehend beschriebenen Ausgestaltungen ausgebildet ist, sowie ein Fahrzeug eine entsprechende optische Erfassungsvorrichtung oder die erfindungsgemäße Reinigungsvorrichtung angeordnet ist.

Die vorliegende Erfindung wird nachfolgend anhand der in den Figuren vereinfacht dargestellten Ausführungsbeispiele näher erläutert. Hierbei zeigt:
Fig.1 eine erste erfindungsgemäße Ausführungsform der Reinigungsvorrichtung mit einer darin angeordneten optischen oder optoelektronischen Vorrichtung in Querschnittsdarstellung (Ansicht a) sowie das zugehörige Heizelement (Ansicht b).
Fig.2 eine zweite erfindungsgemäße Ausführungsform der Reinigungsvorrichtung mit einer darin angeordneten optischen oder optoelektronischen Vorrichtung in Querschnittsdarstellung (Ansicht a) sowie das zugehörige Heizelement (Ansicht b).
Fig.3 eine dritte erfindungsgemäße Ausführungsform der Reinigungsvorrichtung mit einer darin angeordneten optischen oder optoelektronischen Vorrichtung in Querschnittsdarstellung (Ansicht a) sowie das zugehörige Heizelement (Ansicht b).
Fig.4 Die Ausführung gemäß Fig.1 mit einem transparent (Ansicht a) sowie undurchsichtig (Ansicht b) dargestellten Deckelelement jeweils in räumlicher Darstellung.
Fig.5 Räumliche Darstellung einer weiteren erfindungsgemäßen Ausführungsform der Reinigungsvorrichtung mit einer darin angeordneten optischen oder optoelektronischen Vorrichtung und mit einem lediglich im Reinigungsmittelzulauf verlegten Heizelement, dabei ist eine Abdeckung des Reinigungsmittelzulaufs zwecks einer besseren Darstellbarkeit nicht dargestellt.

In allen Figuren sind die gleichen bzw. äquivalenten Elemente und Vorrichtungen, sofern nichts anderes angegeben, mit denselben Bezugszeichen versehen.

Fig.1

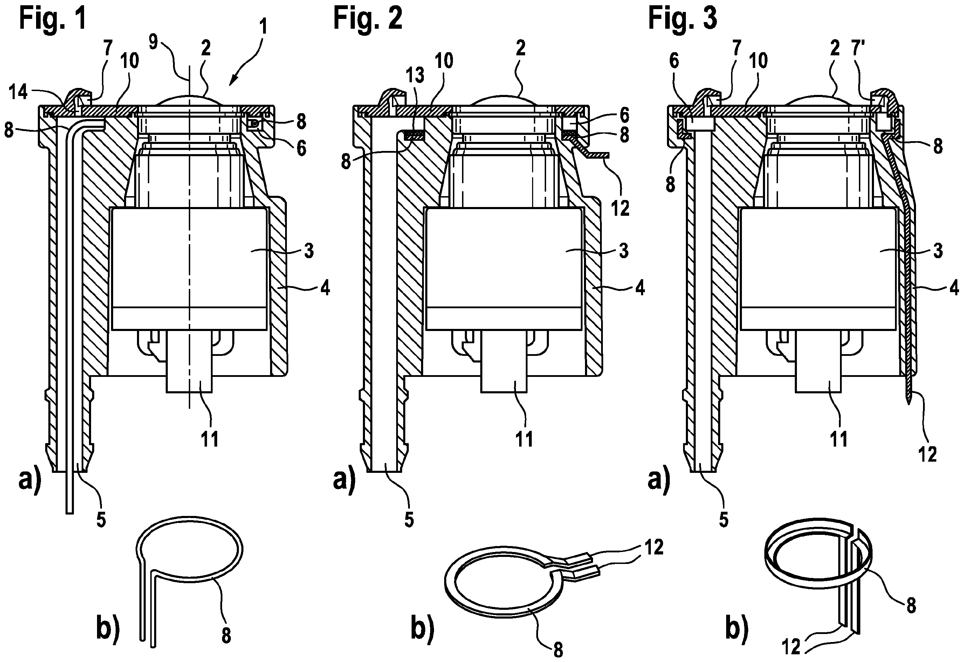

Fig.1 zeigt eine erste erfindungsgemäße Ausführungsform der Reinigungsvorrichtung 1. Eine optische oder optoelektronische Vorrichtung 3 ist in einem Gehäuse 4 vorzugsweise lösbar und insbesondere eingerastet, angeordnet.

Elektrische Schnittstelle 11 dient zum Anschluss der Vorrichtung 3 an eine oder mehrere hier nicht gezeigten elektrische Versorgungseinrichtungen und elektronische Steuereinheiten.

Ein fluides, vorzugsweise flüssiges Reinigungsmittel wird von einer nicht gezeigten Fördereinrichtung - beispielsweise einer Pumpe - durch einen rohrförmigen Reinigungsmittelzulauf 5 in einen in dem Gehäuse 4 eingeformten Ringkanal 6 gefördert.

Der Ringkanal 6 ist im Wesentlichen durch eine Vertiefung in dem Gehäuse 4 gebildet ist, welche eine optische Achse (9) der Vorrichtung 3 radial umläuft. Er ist durch ein Deckelelement 10 verschlossen, welches mit dem Gehäuse 4 dicht und druckfest verbunden ist, im vorliegenden Ausführungsbeispiel verschweißt.

Eine Düse 7 ist an dem Deckelelement 10 angeordnet und ist durch eine Bohrung 14 mit dem Ringkanal 6 hydraulisch verbunden. Beim Betrieb der nicht gezeigten Fördereinrichtung wird das Reinigungsmittel aus dem Ringkanal 6 durch die Bohrung 14 in die Düse 7 und von dort auf die Oberfläche des transparenten Elements 2 gefördert.

Bei der Düse 7 handelt es sich bei der dargestellten Ausführungsform um einen Deflektor, wodurch sie besonders flach gestaltet werden kann um optische Beeinträchtigungen der Vorrichtung 3 zu reduzieren. Innerhalb der Erfindung kann die Düse jedoch genauso als ein Chip, ein Kugeleinsatz oder ein integrierter Kanal oder Bohrung ausgebildet sein.

Ebenso ist ein Gemisch aus einer Flüssigkeit und einem Gas, beispielsweise Druckluft, innerhalb der Erfindung als Reinigungsmittel zulässig.

In dem Ringkanal 6 sowie innerhalb des Reinigungsmittelzulaufs 5 ist eine Heizelement 8 angeordnet. In der gezeigten Ausführungsform ist das Heizelement 8 drahtförmig als ein schlaufenförmig verlegter Heizdraht beziehungsweise Heizwiderstand gestaltet, welcher durch das Anlegen einer Versorgungsspannung sich erwärmt und dabei das Reinigungsmittel unmittelbar direkt, sowie den benachbarten Bereich des Gehäuses 4 und die darin angeordnete Vorrichtung 3 indirekt beheizt.

Der Anschluss des Reinigungsmittelzulaufs 5 kann beispielsweise an einen Schlauch mit innenliegendem Heizdraht, oder ein elektrohydraulisches Anschlussstück erfolgen, womit zugleich die Versorgung mit Reinigungsmittel und elektrischer Energie ermöglicht werden.

Fig.2
In der Fig.2 ist eine zweite erfindungsgemäße Ausführungsform der Reinigungsvorrichtung 1 dargestellt. Im Unterschied zu der Ausführungsform nach Fig.1 ist das Heizelement 8 hier im Wesentlichen ringförmig, mit einem abstehenden Heizelementanschluss 12, aus einem Flachmetallwerkstoff gestanzt ausgebildet. Das Heizelement ist in den gegenüber der vorstehend beschriebenen Ausführungsform vertieft ausgebildeten Ringkanal 6 eingelegt und mit einer Vergußmasse 13 vergossen und somit von dem flüssigkeitsbenetzten Teil des Ringkanals 6 isoliert. Dabei kann der elektrische Heizelementanschluss 12 an einer beliebigen günstigen Stelle aus dem Gehäuse 4 herausgeführt werden.

Fig.3
Die dritte erfindungsgemäße Ausführungsform der Reinigungsvorrichtung 1 verfügt über zwei Düsen 7,7', welche aus dem Ringkanal 6 gespeist werden. Grundsätzlich können innerhalb der Erfindung auch 3 oder mehr Düsen verwendet werden.

Das Heizelement 8 ist als ein Stanzbiegeteil aus einem Flachmetallwerkstoff ausgebildet und verfügt über einen gesonderten Heizelementanschluss 12, ist jedoch im Unterscheid zu der Ausführung nach Fig. 2 unmittelbar im Gehäuse 4 eingebettet, beispielsweise eingespritzt. Zur Verbesserung der Wärmeübertragung aus dem Heizelement 8 auf den Innenraum des Ringkanals 6, sowie den benachbarten Bereich des Gehäuses 4 und die darin angeordnete Vorrichtung 3, ist das Heizelement 8 im gezeigten Beispiel im Querschnitt L-Förmig ausgestaltet.

Fig.4

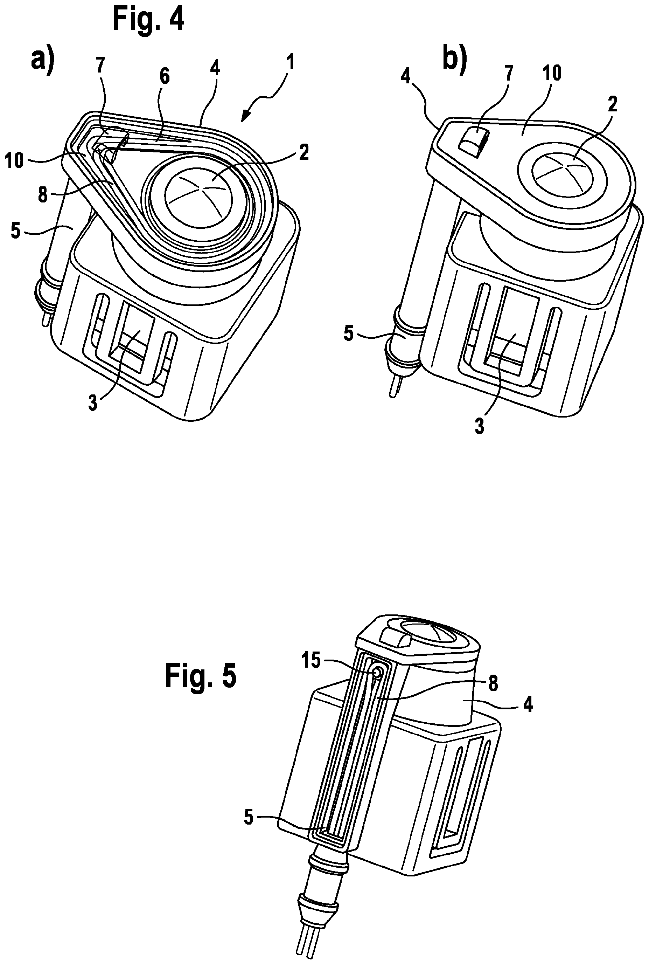

Die Fig. 4 zeigt die Ausführung gemäß Fig.1 in räumlicher Darstellung. Dabei ist das Deckelelement in der Ansicht a) durchsichtig dargestellt, um den Innenaufbau des Ringkanals 6 und Verlegung des Heizelements 8 zu verdeutlichen. Die Ansicht b) zeigt die Reinigungsvorrichtung 1 in ihrem einbaufähigen Zustand.

Fig.5
In der Fig.5 ist eine weitere erfindungsgemäße Ausführungsform der Reinigungsvorrichtung 1 gezeigt. Das Heizelement 8 ist hier genauso wie in der Ausführung gemäß Fig.1 drahtförmig ausgebildet, jedoch lediglich innerhalb des Reinigungsmittelzulaufs 5 und nicht mehr in Ringkanal 6 verlegt. Ein stiftförmiges Umlenkelement 15 dient der Umlenkung des Heizelements 8 und hält es zugleich ortsfest. Eine technologisch erforderliche rückwärtige Abdeckung des Reinigungsmittelzulaufs 5 ist hier zwecks einer besseren Darstellbarkeit nicht gezeigt.

### Bezugszeichenliste

- 1: Reinigungsvorrichtung
- 2: Transparentes Element
- 3: Optische oder optoelektronische Vorrichtung
- 4: Gehäuse
- 5: Reinigungsmittelzulauf
- 6: Ringkanal
- 7: Düse
- 8: Heizelement
- 9: Optische Achse
- 10: Deckelelement
- 11: Elektrische Schnittstelle
- 12: Heizelementanschluss
- 13: Vergußmasse
- 14: Bohrung
- 15: Umlenkelement

## Patentansprüche

1. Reinigungsvorrichtung (1) zum Reinigen eines transparenten Elements (2) einer optischen oder optoelektronischen Vorrichtung (3) mit einem fluiden Reinigungsmittel, umfassend ein Gehäuse (4), in dem die Vorrichtung (3) angeordnet ist, wobei in dem Gehäuse (4) ein über einen Reinigungsmittelzulauf (5) mit dem Reinigungsmittel befüllbarer Ringkanal (6) vorgesehen ist, welcher das transparente Element (2) zumindest bereichsweise umschließt und wenigstens eine Düse (7), welche dazu eingerichtet ist, das Reinigungsmittel auf das transparente Element (2) zu versprühen und aus dem Ringkanal (6) gespeist ist, **dadurch gekennzeichnet, dass** wenigstens ein elektrisch leitendes Heizelement (8) zum Beheizen des Ringkanals (6) und/oder eines dem Ringkanal (6) unmittelbar benachbarten Bereichs des Gehäuses (4) oder des Reinigungsmittelzulaufs (5) vorgesehen ist, wobei das Heizelement (8) in dem Gehäuse (4) innerhalb des Ringkanals (6) angeordnet ist.

2. Reinigungsvorrichtung (1) zum Reinigen eines transparenten Elements (2) einer optischen oder optoelektronischen Vorrichtung (3) mit einem fluiden Reinigungsmittel, umfassend ein Gehäuse (4), in dem die Vorrichtung (3) angeordnet ist, wobei in dem Gehäuse (4) ein über einen Reinigungsmittelzulauf (5) mit dem Reinigungsmittel befüllbarer Ringkanal (6) vorgesehen ist, welcher das transparente Element (2) zumindest bereichsweise umschließt und wenigstens eine Düse (7), welche dazu eingerichtet ist, das Reinigungsmittel auf das transparente Element (2) zu versprühen und aus dem Ringkanal (6) gespeist ist, **dadurch gekennzeichnet, dass** wenigstens ein elektrisch leitendes Heizelement (8) zum Beheizen des Ringkanals (6) und/oder eines dem Ringkanal (6) unmittelbar benachbarten Bereichs des Gehäuses (4) oder des Reinigungsmittelzulaufs (5) vorgesehen ist, wobei das Heizelement (8) in dem Gehäuse (4) außerhalb des Ringkanals (6) angeordnet und im Querschnitt L-Förmig ausgestaltet ist

3. Reinigungsvorrichtung (1) nach wenigstens einem der Ansprüche 1 oder 2 **dadurch gekennzeichnet, dass** der Ringkanal (6) durch eine Vertiefung in dem Gehäuse (4) gebildet ist, welche eine optische Achse (9) der Vorrichtung (3) radial umläuft und durch ein Deckelelement (10) verschlossen ist, wobei die Düse (7) an dem Deckelelement (10) angeordnet ist und eine Schnittstelle zwischen dem Deckelelement (10) und dem Gehäuse (4) hydraulisch dicht, insbesondere stoffschlüssig ausgebildet ist.

4. Reinigungsvorrichtung (1) nach Anspruch 2 **dadurch gekennzeichnet, dass** die Düse (7) einstückig mit dem Deckelelement (10) ausgebildet ist.

5. Reinigungsvorrichtung (1) nach wenigstens einem der vorstehenden Ansprüche **dadurch gekennzeichnet, dass** das Heizelement (8) zumindest bereichsweise in dem Reinigungsmittelzulauf (5) angeordnet ist.

6. Reinigungsvorrichtung (1) nach wenigstens einem der Ansprüche 1 und 3 bis 5 **dadurch gekennzeichnet, dass** das das Heizelement (8) drahtförmig ausgebildet ist.

7. Reinigungsvorrichtung (1) nach wenigstens einem der Ansprüche 1 bis 5 **dadurch gekennzeichnet, dass** das das Heizelement (8) aus einem flachen Metallwerkstoff, insbesondere als ein Stanzbiegeteil ausgebildet ist.

8. Optische Erfassungsvorrichtung zur Anordnung in einem Fahrzeug, umfassend optische oder optoelektronische Vorrichtung (3), welche mit einer Reinigungsvorrichtung (1) nach wenigstens einem der vorangegangenen Ansprüche ausgebildet ist.

9. Fahrzeug in dem eine Reinigungsvorrichtung (1) nach wenigstens einem der Ansprüche 1 bis 7 oder eine optische Erfassungsvorrichtung nach Anspruch 8 angeordnet ist.

## Claims

1. Cleaning apparatus (1) for cleaning a transparent element (2) of an optical or optoelectronic apparatus (3) with a fluid cleaning agent, comprising a housing (4) in which the apparatus (3) is arranged, wherein, in the housing (4), provision is made of a ring duct (6) which is able to be filled with the cleaning agent via a cleaning agent inflow (5) and which passes at least regionally around the transparent element (2), and comprising at least one nozzle (7), which is configured to spray the cleaning agent onto the transparent element (2) and is fed from the ring duct (6), **characterized in that** provision is made of at least one electrically conductive heating element (8) for heating the ring duct (6) and/or a region of the housing (4), or of the cleaning agent inflow (5), that is directly adjacent to the ring duct (6), wherein the heating element (8) is arranged in the housing (4) within the ring duct (6).

2. Cleaning apparatus (1) for cleaning a transparent element (2) of an optical or optoelectronic apparatus (3) with a fluid cleaning agent, comprising a housing (4) in which the apparatus (3) is arranged, wherein, in the housing (4), provision is made of a ring duct (6) which is able to be filled with the cleaning agent via a cleaning agent inflow (5) and which passes at least regionally around the transparent element (2), and comprising at least one nozzle (7), which is configured to spray the cleaning agent onto the transparent element (2) and is fed from the ring duct (6), **characterized in that** provision is made of at least one electrically conductive heating element (8) for heating the ring duct (6) and/or a region of the housing (4), or of the cleaning agent inflow (5), that is directly adjacent to the ring duct (6), wherein the heating element (8) is arranged in the housing (4) outside the ring duct (6) and is of L-shaped form in cross section.

3. Cleaning apparatus (1) according to at least either of Claims 1 and 2, **characterized in that** the ring duct (6) is formed by a depression in the housing (4), which depression runs radially around an optical axis (9) of the apparatus (3) and is closed off by a cover element (10), wherein the nozzle (7) is arranged on the cover element (10), and an interface between the cover element (10) and the housing (4) is formed in a hydraulically sealed manner, in particular in a materially bonded manner.

4. Cleaning apparatus (1) according to Claim 2, **characterized in that** the nozzle (7) is formed integrally with the cover element (10).

5. Cleaning apparatus (1) according to at least one of the preceding claims, **characterized in that** the heating element (8) is arranged at least regionally in the cleaning agent inflow (5).

6. Cleaning apparatus (1) according to at least one of claims 1 and 3 to 5, **characterized in that** the heating element (8) is of wire-like form.

7. Cleaning apparatus (1) according to at least one of claims 1 to 5, **characterized in that** the heating element (8) is formed from a flat metal material, in particular as a stamped and bent part.

8. Optical detection apparatus for arrangement in a vehicle, comprising an optical or optoelectronic apparatus (3) which is formed with a cleaning apparatus (1) according to at least one of the preceding claims.

9. Vehicle in which a cleaning apparatus (1) according to at least one of Claims 1 to 7 or an optical detection apparatus according to Claim 8 is arranged.

## Revendications

1. Dispositif de nettoyage (1) destiné à nettoyer un élément transparent (2) d'un dispositif optique ou optoélectronique (3) à l'aide d'un agent de nettoyage fluide, le dispositif de nettoyage comprenant un boîtier (4) dans lequel le dispositif (3) est disposé, un conduit annulaire (6) étant prévu dans le boîtier (4), lequel conduit peut être rempli d'agent de nettoyage par le biais d'une amenée d'agent de nettoyage (5) et entoure au moins par endroits l'élément transparent (2), et au moins une buse (7) qui est conçue pour pulvériser l'agent de nettoyage sur l'élément transparent (2) et qui est alimentée par le conduit annulaire (6),
**caractérisé en ce que**
au moins un élément chauffant électriquement conducteur (8) est prévu pour chauffer le conduit annulaire (6) et/ou une zone du boîtier (4), immédiatement adjacente au conduit annulaire (6), ou l'amenée d'agent de nettoyage (5), l'élément chauffant (8) étant disposé dans le boîtier (4) à l'intérieur du conduit annulaire (6) .

2. Dispositif de nettoyage (1) destiné à nettoyer un élément transparent (2) d'un dispositif optique ou optoélectronique (3) à l'aide d'un agent de nettoyage fluide, le dispositif de nettoyage comprenant un boîtier (4) dans lequel le dispositif (3) est disposé, un conduit annulaire (6) étant prévu dans le boîtier (4), lequel conduit annulaire peut être rempli d'agent de nettoyage par le biais d'une amenée d'agent de nettoyage (5) et entoure au moins par endroits l'élément transparent (2), et au moins une buse (7) qui est conçue pour pulvériser l'agent de nettoyage sur l'élément transparent (2) et qui est alimentée par le conduit annulaire (6),
**caractérisé en ce que**
au moins un élément chauffant électriquement conducteur (8) est prévu pour chauffer le conduit annulaire (6) et/ou une zone du boîtier (4), immédiatement adjacente au conduit annulaire (6), ou l'entrée d'agent de nettoyage (5), l'élément chauffant (8) étant disposé dans le boîtier (4) à l'extérieur du conduit annulaire (6) et ayant une forme de L en coupe transversale.

3. Dispositif de nettoyage (1) selon l'une au moins des revendications 1 et 2, **caractérisé en ce que** le conduit annulaire (6) est formé par un évidement qui est ménagé dans le boîtier (4) et qui s'étend radialement autour d'un axe optique (9) du dispositif (3) et qui est fermé par un élément formant couvercle (10), la buse (7) étant disposée sur l'élément formant couvercle (10) et une interface étant formée de manière hydrauliquement étanche, en particulier par une liaison de matière, entre l'élément formant couvercle (10) et le boîtier (4).

4. Dispositif de nettoyage (1) selon la revendication 2, **caractérisé en ce que** la buse (7) est formée d'une seule pièce avec l'élément formant couvercle (10).

5. Dispositif de nettoyage (1) selon l'une au moins des revendications précédentes, **caractérisé en ce que** l'élément chauffant (8) est disposé au moins par endroits dans l'amenée d'agent de nettoyage (5).

6. Dispositif de nettoyage (1) selon l'une au moins des revendications 1 et 3 à 5, **caractérisé en ce que** l'élément chauffant (8) est en forme de fil métallique.

7. Dispositif de nettoyage (1) selon l'une au moins des revendications 1 à 5, **caractérisé en ce que** l'élément chauffant (8) est réalisé en matériau métallique plat, notamment sous la forme d'une pièce emboutie et pliée.

8. Dispositif de détection optique destiné à être disposé dans un véhicule et comprenant un dispositif optique ou optoélectronique (3) qui est formé avec un dispositif de nettoyage (1) selon l'une au moins des revendications précédentes.

9. Véhicule dans lequel est disposé un dispositif de nettoyage (1) selon l'une au moins des revendications 1 à 7 ou un dispositif de détection optique selon la revendication 8.
